# EUROPEAN PATENT APPLICATION

(11) **EP 4 819 743 A1**
(43) Date of publication of application: **07.10.2026**
(21) Application number: 24916758.6
(22) Date of filing: 27.12.2024
(51) Int. Cl.: H04W 72/541

(54) **COMMUNICATION METHOD AND RELATED APPARATUS**

(30) Priority: 12.01.2024 CN 202410056743
(71) Applicant: Honor Device Co., Ltd., Shenzhen, Guangdong 518040 (CN)
(72) Inventor: CHI, Liangang, Shenzhen, Guangdong 518040 (CN); TANG, Xiaoxuan, Shenzhen, Guangdong 518040 (CN)
(74) Representative: Isarpatent
(86) International application number: PCT/CN2024/142959
(87) International publication number: WO 2025/148711

(57) **Abstract**

A communication method and a related apparatus are provided. The method includes: A network device sends first information to a terminal device, where the first information indicates the terminal device to periodically perform information transmission based on first transmission resource configuration information, or aperiodically perform information transmission based on second transmission resource configuration information. According to this method, the first information indicates the terminal device to periodically perform information transmission based on the first transmission resource configuration information, or aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

## Description

This application claims priority to Chinese Patent Application No. 202410056743.4, filed with the China National Intellectual Property Administration on January 12, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Internet of things (internet of things, IoT) refers to connecting any object to a network through information according to an agreed protocol, where the object performs information exchange and communication via an information propagation media, to achieve functions such as intelligent identification, positioning, tracking, and monitoring.

In recent years, internet of things has attracted wide attention in the field of wireless communication technologies. More "things" are connected to each other through internet of things, to improve production efficiency and living comfort.

However, with wide application of ambient internet of things (ambient internet of things, A-IoT) devices, when the A-IoT devices are densely deployed, severe communication interference exists between the A-IoT devices, resulting in low communication efficiency.

Therefore, how to avoid the communication interference between the A-IoT devices becomes an important topic researched by a person skilled in the art.

### SUMMARY

Embodiments of this application provide a communication method and a related apparatus, to implement effective transmission resource allocation, avoid communication interference between A-IoT devices, and improve communication efficiency.

**According to a first aspect**, an embodiment of this application provides a communication method, applied to a network device. It may be understood that the method may be performed by a communication apparatus. The communication apparatus may be the network device, or may be a chip (system) or a circuit used in the network device. This is not limited in this application. The method includes:
sending first information to a terminal device, where the first information indicates the terminal device to periodically perform information transmission based on first transmission resource configuration information, or aperiodically perform information transmission based on second transmission resource configuration information.

In this embodiment of this application, a communication method is provided. The network device sends the first information to the terminal device. Correspondingly, the terminal device receives the first information. The network device and/or the terminal device may alternatively be a processor/chip that may be configured to execute computer-executable instructions. This is not limited in embodiments of this application.

The first information in this embodiment of this application indicates the terminal device to periodically perform information transmission based on the first transmission resource configuration information, or aperiodically perform information transmission based on the second transmission resource configuration information. Correspondingly, after receiving the first information, based on an indication of the first information, the terminal device periodically performs information transmission based on the first transmission resource configuration information, or aperiodically performs information transmission based on the second transmission resource configuration information.

Currently, when A-IoT devices are densely deployed, severe communication interference exists between the A-IoT devices, resulting in low communication efficiency.

However, in this embodiment of this application, the first information indicates the terminal device to periodically perform information transmission based on the first transmission resource configuration information, or aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the first information may be carried in any one of the following messages:
a system information block (system information block, SIB), radio resource control (radio resource control, RRC) signaling, and a media access control control element (media access control control element, MAC-CE).

**In a possible implementation,** the first transmission resource configuration information includes at least two of the following:
identification information corresponding to a transmission mode, time domain information corresponding to the transmission mode, and frequency domain information corresponding to the transmission mode.

In this implementation of this application, a possible specific implementation of the first transmission resource configuration information is provided. Specifically, the first transmission resource configuration information includes, but is not limited to, at least two of the identification information, the time domain information, and the frequency domain information that correspond to the transmission mode. The transmission mode and a corresponding transmission resource may be uniquely determined based on the foregoing at least two pieces of information, thereby implementing effective transmission resource allocation.

**In a possible implementation,** the time domain information corresponding to the transmission mode includes at least one of the following:
a length of a transmission periodicity corresponding to one or more transmission modes, a start position offset of the transmission periodicity, and correspondences between one or more transmission time periods within the transmission periodicity and the transmission modes.

In this implementation of this application, a possible specific implementation of the time domain information corresponding to the transmission mode is provided. Specifically, the time domain information corresponding to the transmission mode includes, but is not limited to, at least one of the length of the transmission periodicity corresponding to the one or more transmission modes, the start position offset of the transmission periodicity, and the correspondences between the one or more transmission time periods within the transmission periodicity and the transmission modes. The transmission mode and a corresponding time domain resource may be determined based on the foregoing at least one piece of information, thereby implementing effective transmission resource allocation.

Optionally, the correspondences between the one or more transmission time periods within the transmission periodicity and the transmission modes may be implemented in a manner of a bitmap (bitmap). Optionally, assuming that five transmission modes, which are respectively a transmission mode 1, a transmission mode 2, a transmission mode 3, a transmission mode 4, and a transmission mode 5, are set in one transmission periodicity, and the transmission periodicity includes five time periods, which are respectively a time period 1, a time period 2, a time period 3, a time period 4, and a time period 5, correspondences between the transmission modes and the time periods are respectively: The transmission mode 1 corresponds to the time period 1, the transmission mode 2 corresponds to the time period 2, the transmission mode 3 corresponds to the time period 3, the transmission mode 4 corresponds to the time period 4, and the transmission mode 5 corresponds to the time period 5. Optionally, assuming that five transmission modes, which are respectively a transmission mode 1, a transmission mode 2, a transmission mode 3, a transmission mode 4, and a transmission mode 5, are set in one transmission periodicity, and the transmission periodicity includes seven time periods, which are respectively a time period 1, a time period 2, a time period 3, a time period 4, a time period 5, a time period 6, and a time period 7, correspondences between the transmission modes and the time periods are respectively: The transmission mode 1 corresponds to the time period 1, the transmission mode 2 corresponds to the time period 2, the transmission mode 3 corresponds to the time period 3, the transmission mode 4 corresponds to the time period 4 and the time period 5, and the transmission mode 5 corresponds to the time period 6 and the time period 7. Based on the foregoing time domain information corresponding to the transmission mode, the time domain resource corresponding to the transmission mode may be uniquely determined based on the transmission mode, thereby implementing effective transmission resource allocation.

**In a possible implementation,** the transmission periodicity includes a plurality of time units, and the start position offset of the transmission periodicity satisfies the following relationship: $Offset = \left({2}^{μ}*10{n}_{f}+{n}_{s}\right) mod T .$

Offset represents the start position offset of the transmission periodicity, µ represents a parameter of a subcarrier spacing inside a system frame, n_{f} represents a sequence number of the system frame, and nₛ represents a sequence number of a time unit inside the system frame.

In this implementation of this application, a possible specific implementation of the transmission periodicity is provided. Specifically, the transmission periodicity includes the plurality of time units, and the start position offset of the transmission periodicity (that is, a start time unit of the transmission periodicity) satisfies the foregoing relationship, so that the correspondences between the one or more transmission time periods within the transmission periodicity and the transmission modes can be implemented, thereby implementing effective transmission resource allocation.

Optionally, the time unit may be a slot (slot), may be a radio frame, or may be an orthogonal frequency division multiplexing (orthogonal frequency division multiplexing, OFDM) symbol. This is not limited in embodiments of this application.

Optionally, the start position offset of the transmission periodicity may be configured by the network device, or may be preconfigured according to a protocol. This is not limited in embodiments of this application.

Optionally, for the parameter *µ* of the subcarrier spacing inside the system frame, refer to section 4.2 of the 3rd generation partnership project technical specification (3rd Generation Partnership Project Technical specification, 3GPP TS) 38.211. Details are not described herein again.

**In a possible implementation,** the frequency domain information corresponding to the transmission mode includes at least one of the following:
a start position in frequency domain corresponding to the transmission mode and a frequency domain bandwidth occupied by the transmission mode.

In this implementation of this application, a possible specific implementation of the frequency domain information corresponding to the transmission mode is provided. Specifically, the frequency domain information corresponding to the transmission mode includes, but is not limited to, at least one of the start position in frequency domain corresponding to the transmission mode and the frequency domain bandwidth occupied by the transmission mode. The transmission mode and a corresponding frequency domain resource may be determined based on the foregoing at least one piece of information, thereby implementing effective transmission resource allocation.

Optionally, the start position in frequency domain corresponding to the transmission mode may be an index of a start resource block (resource block, RB), and the frequency domain bandwidth occupied by the transmission mode may be a quantity of consecutive RBs. The transmission mode and the corresponding frequency domain resource may be determined based on indexes and the quantity of the resource blocks, thereby implementing effective transmission resource allocation.

**In a possible implementation,** the method further includes:
sending second information to the terminal device, where the second information indicates to activate or deactivate the one or more transmission modes in the first transmission resource configuration information.

In this implementation of this application, a possible specific implementation of activating or deactivating the transmission mode is provided. Specifically, the network device sends the second information to the terminal device. Correspondingly, the terminal device receives the second information from the network device. The second information indicates to activate or deactivate the one or more transmission modes in the first transmission resource configuration information. According to this embodiment of this application, the transmission mode in the first transmission resource configuration information may be activated, thereby implementing effective transmission resource allocation. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the second information includes identification information corresponding to one or more transmission modes, for indicating to activate or deactivate the one or more transmission modes.

Optionally, the second information may be carried in a media access control control element (media access control control element, MAC-CE), and indicates to activate or deactivate the one or more transmission modes in the first transmission resource configuration information carried in a system information block (system information block, SIB) or radio resource control (radio resource control, RRC) signaling.

Optionally, the second information and the first information may be carried in different messages, or the second information and the first information may be carried in different fields of a same message. This is not limited in embodiments of this application.

**In a possible implementation,** the method further includes:
sending third information to the terminal device, where the third information indicates the terminal device to periodically perform information transmission based on the one or more transmission modes in the first transmission resource configuration information, or indicates the terminal device to periodically perform information transmission based on the one or more transmission modes indicated by the second information.

In this implementation of this application, a possible specific implementation of indicating the terminal device to perform information transmission is provided. Specifically, the network device sends the third information to the terminal device. Correspondingly, the terminal device receives the third information from the network device. The third information indicates the terminal device to periodically perform information transmission based on the one or more transmission modes in the first transmission resource configuration information, or indicates the terminal device to periodically perform information transmission based on the one or more transmission modes indicated by the second information. According to this embodiment of this application, effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the third information may be carried in downlink control information (down control information, DCI).

Optionally, the third information, the second information, and the first information may be carried in different messages, or may be respectively carried in different fields of a same message. This is not limited in embodiments of this application.

**In a possible implementation,** the second transmission resource configuration information includes at least one of the following:
length information of a time window and frequency-domain position information.

In this implementation of this application, a possible specific implementation of the second transmission resource configuration information is provided. Specifically, the second transmission resource configuration information includes, but is not limited to, at least one of the length information of the time window and the frequency-domain position information. A transmission resource may be uniquely determined based on the foregoing at least one piece of information, thereby implementing effective transmission resource allocation.

Optionally, the second transmission resource configuration information may be carried in signaling such as a SIB, RRC, a MAC-CE, to be sent to the terminal device, or may be preconfigured according to a protocol. This is not limited in embodiments of this application.

**In a possible implementation,** the length information of the time window and/or the frequency-domain position information are/is carried in the first information; or the length information of the time window and/or the frequency-domain position information are/is preconfigured according to a protocol.

In this implementation of this application, a possible specific implementation of the length information of the time window and/or the frequency-domain position information is provided. Specifically, the length information of the time window and/or the frequency-domain position information may be carried in the first information to be sent to the terminal device, or may be understood as being carried in the signaling such as the SIB, the RRC, and the MAC-CE to be sent to the terminal device, or may be preconfigured according to a protocol. This is not limited in embodiments of this application.

**In a possible implementation,** the method further includes:
sending fourth information to the terminal device, where the fourth information indicates to start one or more time windows in the second transmission resource configuration information.

In this implementation of this application, a possible specific implementation of indicating to open the time window is provided. Specifically, the network device sends the fourth information to the terminal device. Correspondingly, the terminal device receives the fourth information from the network device. The fourth information indicates to start the one or more time windows in the second transmission resource configuration information, thereby implementing effective transmission resource allocation. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the fourth information may be carried in any one of the following messages:
a media access control control element (media access control control element, MAC-CE) and downlink control information (down control information, DCI).

Optionally, the fourth information and the first information may be carried in different messages, or may be respectively carried in different fields of a same message. This is not limited in embodiments of this application.

**In a possible implementation,** the method further includes:
sending fifth information to the terminal device, where the fifth information indicates a relative position between a time window other than a 1^{st} time window in the second transmission resource configuration information and the 1^{st} time window, or
a relative position between a time window other than a 1^{st} time window in the second transmission resource configuration information and the 1^{st} time window is pre-agreed on according to a protocol.

In this implementation of this application, a possible specific implementation of indicating a position of the time window is provided. Specifically, the network device sends the fifth information to the terminal device. Correspondingly, the terminal device receives the fifth information from the network device. The relative position between the time window other than the 1^{st} time window in the second transmission resource configuration information and the 1^{st} time window is indicated by the fifth information indication, or the relative position between the time window other than the 1^{st} time window in the second transmission resource configuration information and the 1^{st} time window is preconfigured according to a protocol, to determine positions of the one or more time windows, thereby implementing effective transmission resource allocation.

Optionally, the fifth information, the fourth information, and the first information may be carried in different messages, or may be respectively carried in different fields of a same message. This is not limited in embodiments of this application.

**In a possible implementation,** the terminal device includes an internet of things IoT terminal.

In this implementation of this application, a possible specific implementation of the terminal device is provided. Specifically, the terminal device includes, but is not limited to, the internet of things IoT terminal. When the communication method in this embodiment of this application is applied to a case in which a plurality of A-IoT devices are densely deployed, a transmission resource is effectively allocated to the plurality of A-IoT devices, so that communication interference between the A-IoT devices can be avoided, and communication efficiency can be improved.

**According to a second aspect,** an embodiment of this application provides a communication method, applied to a terminal device. It may be understood that the method may be performed by a communication apparatus. The communication apparatus may be the terminal device, or may be a chip (system) or a circuit used in the terminal device. This is not limited in this application. The method includes:
receiving first information from a network device, where the first information indicates the terminal device to periodically perform information transmission based on first transmission resource configuration information, or aperiodically perform information transmission based on second transmission resource configuration information; and
based on the first information, periodically performing information transmission based on the first transmission resource configuration information, or aperiodically performing information transmission based on the second transmission resource configuration information.

In this embodiment of this application, a communication method is provided. The network device sends the first information to the terminal device. Correspondingly, the terminal device receives the first information and performs information transmission based on the first information. The network device and/or the terminal device may also alternatively a processor/chip that may be configured to execute computer executable instructions. This is not limited in embodiments of this application.

The first information in this embodiment of this application indicates the terminal device to periodically perform information transmission based on the first transmission resource configuration information, or aperiodically perform information transmission based on the second transmission resource configuration information. Correspondingly, after receiving the first information, based on an indication of the first information, the terminal device periodically performs information transmission based on the first transmission resource configuration information, or aperiodically performs information transmission based on the second transmission resource configuration information.

Currently, when A-IoT devices are densely deployed, severe communication interference exists between the A-IoT devices, resulting in low communication efficiency.

However, in this embodiment of this application, the first information indicates the terminal device to periodically perform information transmission based on the first transmission resource configuration information, or aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the first information may be carried in any one of the following messages:
a system information block (system information block, SIB), radio resource control (radio resource control, RRC) signaling, and a media access control control element (media access control control element, MAC-CE).

**In a possible implementation,** the first transmission resource configuration information includes at least two of the following:
identification information corresponding to a transmission mode, time domain information corresponding to the transmission mode, and frequency domain information corresponding to the transmission mode.

In this implementation of this application, a possible specific implementation of the first transmission resource configuration information is provided. Specifically, the first transmission resource configuration information includes, but is not limited to, at least two of the identification information, the time domain information, and the frequency domain information that correspond to the transmission mode. The transmission mode and a corresponding transmission resource may be uniquely determined based on the foregoing at least two pieces of information, thereby implementing effective transmission resource allocation.

**In a possible implementation,** the time domain information corresponding to the transmission mode includes at least one of the following:
a length of a transmission periodicity corresponding to one or more transmission modes, a start position offset of the transmission periodicity, and correspondences between one or more transmission time periods within the transmission periodicity and the transmission modes.

In this implementation of this application, a possible specific implementation of the time domain information corresponding to the transmission mode is provided. Specifically, the time domain information corresponding to the transmission mode includes, but is not limited to, at least one of the length of the transmission periodicity corresponding to the one or more transmission modes, the start position offset of the transmission periodicity, and the correspondences between the one or more transmission time periods within the transmission periodicity and the transmission modes. The transmission mode and a corresponding time domain resource may be determined based on the foregoing at least one piece of information, thereby implementing effective transmission resource allocation.

Optionally, the correspondences between the one or more transmission time periods within the transmission periodicity and the transmission modes may be implemented in a manner of a bitmap (bitmap). Optionally, assuming that five transmission modes, which are respectively a transmission mode 1, a transmission mode 2, a transmission mode 3, a transmission mode 4, and a transmission mode 5, are set in one transmission periodicity, and the transmission periodicity includes five time periods, which are respectively a time period 1, a time period 2, a time period 3, a time period 4, and a time period 5, correspondences between the transmission modes and the time periods are respectively: The transmission mode 1 corresponds to the time period 1, the transmission mode 2 corresponds to the time period 2, the transmission mode 3 corresponds to the time period 3, the transmission mode 4 corresponds to the time period 4, and the transmission mode 5 corresponds to the time period 5. Optionally, assuming that five transmission modes, which are respectively a transmission mode 1, a transmission mode 2, a transmission mode 3, a transmission mode 4, and a transmission mode 5, are set in one transmission periodicity, and the transmission periodicity includes seven time periods, which are respectively a time period 1, a time period 2, a time period 3, a time period 4, a time period 5, a time period 6, and a time period 7, correspondences between the transmission modes and the time periods are respectively: The transmission mode 1 corresponds to the time period 1, the transmission mode 2 corresponds to the time period 2, the transmission mode 3 corresponds to the time period 3, the transmission mode 4 corresponds to the time period 4 and the time period 5, and the transmission mode 5 corresponds to the time period 6 and the time period 7. Based on the foregoing time domain information corresponding to the transmission mode, the time domain resource corresponding to the transmission mode may be uniquely determined based on the transmission mode, thereby implementing effective transmission resource allocation.

**In a possible implementation,** the transmission periodicity includes a plurality of time units, and the start position offset of the transmission periodicity satisfies the following relationship: $Offset = \left({2}^{μ}*10{n}_{f}+{n}_{s}\right) mod T .$

Offset represents the start position offset of the transmission periodicity, µ represents a parameter of a subcarrier spacing inside a system frame, n_{f} represents a sequence number of the system frame, and nₛ represents a sequence number of a time unit inside the system frame.

In this implementation of this application, a possible specific implementation of the transmission periodicity is provided. Specifically, the transmission periodicity includes the plurality of time units, and the start position offset of the transmission periodicity (that is, a start time unit of the transmission periodicity) satisfies the foregoing relationship, so that the correspondences between the one or more transmission time periods within the transmission periodicity and the transmission modes can be implemented, thereby implementing effective transmission resource allocation.

Optionally, the time unit may be a slot (slot), may be a radio frame, or may be an orthogonal frequency division multiplexing (orthogonal frequency division multiplexing, OFDM) symbol. This is not limited in embodiments of this application.

Optionally, the start position offset of the transmission periodicity may be configured by the network device, or may be preconfigured according to a protocol. This is not limited in embodiments of this application.

Optionally, for the parameter *µ* of the subcarrier spacing inside the system frame, refer to section 4.2 of the protocol, 3GPP TS 38.211. Details are not described herein again.

**In a possible implementation,** the frequency domain information corresponding to the transmission mode includes at least one of the following:
a start position in frequency domain corresponding to the transmission mode and a frequency domain bandwidth occupied by the transmission mode.

In this implementation of this application, a possible specific implementation of the frequency domain information corresponding to the transmission mode is provided. Specifically, the frequency domain information corresponding to the transmission mode includes, but is not limited to, at least one of the start position in frequency domain corresponding to the transmission mode and the frequency domain bandwidth occupied by the transmission mode. The transmission mode and a corresponding frequency domain resource may be determined based on the foregoing at least one piece of information, thereby implementing effective transmission resource allocation.

Optionally, the start position in frequency domain corresponding to the transmission mode may be an index of a start resource block (resource block, RB), and the frequency domain bandwidth occupied by the transmission mode may be a quantity of consecutive RBs. The transmission mode and the corresponding frequency domain resource may be determined based on indexes and the quantity of the resource blocks, thereby implementing effective transmission resource allocation.

**In a possible implementation,** the method further includes:
receiving second information from the network device, where the second information indicates to activate or deactivate the one or more transmission modes in the first transmission resource configuration information.

In this implementation of this application, a possible specific implementation of activating or deactivating the transmission mode is provided. Specifically, the network device sends the second information to the terminal device. Correspondingly, the terminal device receives the second information from the network device. The second information indicates to activate or deactivate the one or more transmission modes in the first transmission resource configuration information. According to this embodiment of this application, the transmission mode in the first transmission resource configuration information may be activated, thereby implementing effective transmission resource allocation. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the second information includes identification information corresponding to one or more transmission modes, for indicating to activate or deactivate the one or more transmission modes.

Optionally, the second information may be carried in a media access control control element (media access control control element, MAC-CE), and indicates to activate or deactivate the one or more transmission modes in the first transmission resource configuration information carried in a system information block (system information block, SIB) or radio resource control (radio resource control, RRC) signaling.

Optionally, the second information and the first information may be carried in different messages, or the second information and the first information may be carried in different fields of a same message. This is not limited in embodiments of this application.

**In a possible implementation,** the method further includes:
receiving third information from the network device, where the third information indicates the terminal device to periodically perform information transmission based on the one or more transmission modes in the first transmission resource configuration information, or indicates the terminal device to periodically perform information transmission based on the one or more transmission modes indicated by the second information; and
based on the third information, periodically performing information transmission based on the one or more transmission modes in the first transmission resource configuration information, or periodically performing information transmission based on the one or more transmission modes indicated by the second information.

In this implementation of this application, a possible specific implementation of indicating the terminal device to perform information transmission is provided. Specifically, the network device sends the third information to the terminal device. Correspondingly, the terminal device receives the third information from the network device, and based on an indication of the third information, periodically performs information transmission based on the one or more transmission modes in the first transmission resource configuration information, or periodically performs information transmission based on the one or more transmission modes indicated by the second information. According to this embodiment of this application, effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the third information may be carried in downlink control information (down control information, DCI).

Optionally, the third information, the second information, and the first information may be carried in different messages, or may be respectively carried in different fields of a same message. This is not limited in embodiments of this application.

**In a possible implementation,** the second transmission resource configuration information includes at least one of the following:
length information of a time window and frequency-domain position information.

In this implementation of this application, a possible specific implementation of the second transmission resource configuration information is provided. Specifically, the second transmission resource configuration information includes, but is not limited to, at least one of the length information of the time window and the frequency-domain position information. A transmission resource may be uniquely determined based on the foregoing at least one piece of information, thereby implementing effective transmission resource allocation.

Optionally, the second transmission resource configuration information may be carried in signaling such as a SIB, RRC, a MAC-CE, to be sent to the terminal device, or may be preconfigured according to a protocol. This is not limited in embodiments of this application.

**In a possible implementation,** the length information of the time window and/or the frequency-domain position information are/is carried in the first information; or the length information of the time window and/or the frequency-domain position information are/is preconfigured according to a protocol.

In this implementation of this application, a possible specific implementation of the length information of the time window and/or the frequency-domain position information is provided. Specifically, the length information of the time window and/or the frequency-domain position information may be carried in the first information to be sent to the terminal device, or may be understood as being carried in the signaling such as the SIB, the RRC, and the MAC-CE to be sent to the terminal device, or may be preconfigured according to a protocol. This is not limited in embodiments of this application.

**In a possible implementation,** the method further includes:
receiving fourth information from the network device, where the fourth information indicates to start one or more time windows in the second transmission resource configuration information.

In this implementation of this application, a possible specific implementation of indicating to open the time window is provided. Specifically, the network device sends the fourth information to the terminal device. Correspondingly, the terminal device receives the fourth information from the network device, and starts the one or more time windows in the second transmission resource configuration information based on an indication of the fourth information, thereby implementing effective transmission resource allocation. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the fourth information may be carried in any one of the following messages:
a media access control control element (media access control control element, MAC-CE) and downlink control information (down control information, DCI).

Optionally, the fourth information and the first information may be carried in different messages, or may be respectively carried in different fields of a same message. This is not limited in embodiments of this application.

**In a possible implementation,** the method further includes:
receiving fifth information from the network device, where the fifth information indicates a relative position between a time window other than a 1^{st} time window in the second transmission resource configuration information and the 1^{st} time window, or
a relative position between a time window other than a 1^{st} time window in the second transmission resource configuration information and the 1^{st} time window is pre-agreed on according to a protocol; and
determining positions of one or more time windows in the second transmission resource configuration information based on the fifth information.

In this implementation of this application, a possible specific implementation of determining the position of the time window is provided. Specifically, the network device sends the fifth information to the terminal device. Correspondingly, the terminal device receives the fifth information from the network device, and determines the relative position between the time window other than the 1^{st} time window in the second transmission resource configuration information and the 1^{st} time window based on an indication of the fifth information, or determines the relative position between the time window other than the 1^{st} time window in the second transmission resource configuration information and the 1^{st} time window based on a prior agreement in the protocol, to determine the positions of the one or more time windows, thereby implementing effective transmission resource allocation.

Optionally, the fifth information, the fourth information, and the first information may be carried in different messages, or may be respectively carried in different fields of a same message. This is not limited in embodiments of this application.

**In a possible implementation,** the terminal device includes an internet of things IoT terminal.

In this implementation of this application, a possible specific implementation of the terminal device is provided. Specifically, the terminal device includes, but is not limited to, the internet of things IoT terminal. When the communication method in this embodiment of this application is applied to a case in which a plurality of A-IoT devices are densely deployed, a transmission resource is effectively allocated to the plurality of A-IoT devices, so that communication interference between the A-IoT devices can be avoided, and communication efficiency can be improved.

According to a third aspect, an embodiment of this application provides a communication apparatus. The apparatus includes a unit configured to perform the method according to any one of the first aspect.

In a possible design, the apparatus includes:
a communication unit, configured to send first information to a terminal device, where the first information indicates the terminal device to periodically perform information transmission based on first transmission resource configuration information, or aperiodically perform information transmission based on second transmission resource configuration information.

In a possible implementation, the apparatus further includes:
a processing unit, configured to generate the first information.

For steps performed by the processing unit and the communication unit according to any one of the third aspect and the possible implementations, refer to the corresponding first aspect and a corresponding implementation.

For a technical effect brought by any one of the third aspect or the possible implementations, refer to descriptions of a technical effect corresponding to the first aspect and the corresponding implementation.

According to a fourth aspect, an embodiment of this application provides a communication apparatus. The apparatus includes a unit configured to perform the method according to any one of the second aspect.

In a possible design, the apparatus includes:
a communication unit, configured to receive first information from a network device, where the first information indicates a terminal device to periodically perform information transmission based on first transmission resource configuration information, or aperiodically perform information transmission based on second transmission resource configuration information; and
a processing unit, configured to, based on the first information, periodically perform information transmission based on the first transmission resource configuration information, or aperiodically perform information transmission based on the second transmission resource configuration information.

For steps performed by the processing unit and the communication unit according to any one of the fourth aspect and the possible implementations, refer to the corresponding second aspect and a corresponding implementation.

For a technical effect brought by any one of the fourth aspect or the possible implementations, refer to descriptions of a technical effect corresponding to the second aspect and the corresponding implementation.

Optionally, in the communication apparatus according to any one of the third aspect, the fourth aspect, and the possible implementations:
In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in the communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit. The processing unit may be at least one processor, a processing circuit, a logic circuit, or the like.

According to a fifth aspect, an embodiment of this application provides a communication apparatus. The communication apparatus includes a processor. The processor is coupled to a memory, and may be configured to execute instructions in the memory to implement the method according to any one of the first aspect, the second aspect, and the possible implementations. Optionally, the communication apparatus further includes a memory. Optionally, the communication apparatus further includes a communication interface, and the processor is coupled to the communication interface.

According to a sixth aspect, an embodiment of this application provides a communication apparatus, including a logic circuit and a communication interface. The communication interface is configured to receive information or send information; and the logic circuit is configured to receive information or send information through the communication interface, so that the communication apparatus performs the method according to any one of the first aspect, the second aspect, and the possible implementations.

According to a seventh aspect, an embodiment of this application provides a computer-readable storage medium. The computer-readable storage medium is configured to store a computer program (also referred to as code or instructions). When the computer program is run on a computer, the method according to any one of the first aspect, the second aspect, and the possible implementations is implemented.

According to an eighth aspect, an embodiment of this application provides a computer program product. The computer program product includes a computer program (also referred to as code or instructions). When the computer program is run, a computer is caused to perform the method according to any one of the first aspect, the second aspect, and the possible implementations.

According to a ninth aspect, an embodiment of this application provides a chip. The chip includes a processor, the processor is configured to execute instructions, and when the processor executes the instructions, the chip is caused to perform the method according to any one of the first aspect, the second aspect, and the possible implementations. Optionally, the chip further includes a communication interface, and the communication interface is configured to receive a signal or send a signal.

According to a tenth aspect, an embodiment of this application provides a communication system. The communication system includes at least one of the following: the communication apparatus according to the third aspect, or the communication apparatus according to the fourth aspect, or the communication apparatus according to the fifth aspect, or the communication apparatus according to the sixth aspect, or the chip according to the ninth aspect.

According to an eleventh aspect, an embodiment of this application provides a communication system. The communication system includes a network device and a terminal device, the network device is configured to perform the method according to any one of the first aspect and the possible implementations, and the terminal device is configured to perform the method according to any one of the second aspect and the possible implementations.

In addition, in a process of performing the method according to any one of the first aspect, the second aspect, and the possible implementations, a process related to sending information and/or receiving information in the foregoing method may be understood as a process in which a processor outputs information and/or a process in which the processor receives input information. When outputting the information, the processor may output the information to a transceiver (or a communication interface, or a sending module), so that the transceiver transmits the information. After the information is output by the processor, other processing may need to be performed on the information before the information reaches the transceiver. Similarly, when the processor receives the input information, the transceiver (or the communication interface, or the sending module) receives the information and inputs the information into the processor. Further, after the transceiver receives the information, other processing may need to be performed on the information before the information is input to the processor.

Based on the foregoing principle, for example, sending information mentioned in the foregoing method may be understood as outputting information by the processor. For another example, receiving information may be understood as receiving input information by the processor.

Optionally, operations such as transmitting, sending, and receiving related to the processor may be more generally understood as operations such as outputting, receiving, and inputting by the processor if the operations are not specifically described, or if there is no special description, or if the operations do not conflict with an actual function or internal logic of the operations in related descriptions.

Optionally, in a process of performing the method according to any one of the first aspect, the second aspect, and the possible implementations, the processor may be a processor specially configured to perform these methods, or may be a processor, for example, a general-purpose processor, performing these methods by executing computer instructions in a memory. The memory may be a non-transitory (non-transitory) memory, for example, a read-only memory (Read Only Memory, ROM). The memory and the processor may be integrated on a same chip, or may be disposed on different chips respectively. A type of the memory and a manner of disposing the memory and the processor are not limited in embodiments of this application.

In a possible implementation, the foregoing at least one memory is located outside an apparatus.

In another possible implementation, the at least one memory is located in an apparatus.

In still another possible implementation, a part of the at least one memory is located inside an apparatus, and the other part of the at least one memory is located outside the apparatus.

In this application, the processor and the memory may alternatively be integrated into one component. In other words, the processor and the memory may alternatively be integrated together.

In this embodiment of this application, the first information indicates the terminal device to periodically perform information transmission based on the first transmission resource configuration information, or aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

### BRIEF DESCRIPTION OF DRAWINGS

To describe the technical solutions of embodiments of this application more clearly, the following briefly describes the accompanying drawings required for embodiments of this application. Apparently, the accompanying drawings in the following descriptions show only some embodiments of this application, and a person of ordinary skill in the art may still derive other drawings from these accompanying drawings without creative efforts.
FIG. 1 is a diagram of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a chip according to an embodiment of this application.

### DESCRIPTION OF EMBODIMENTS

To make the objectives, technical solutions, and advantages of this application clearer, the following describes embodiments of this application with reference to the accompanying drawings in embodiments of this application.

Terms "first", "second", and the like in the specification, claims, and accompanying drawings of this application are used to distinguish between different objects, and are not used to describe a specific order. In addition, the terms "include", "have", and any variant thereof are intended to cover a non-exclusive inclusion. For example, processes, methods, systems, products, or devices that include a series of steps or units are not limited to listed steps or units, and instead, optionally further include steps or units that are not listed, or optionally further include other steps or units inherent to these processes, methods, products, or devices.

"Embodiment" mentioned in the specification means that particular features, structures, or characteristics described with reference to embodiments may be included in at least one embodiment of this application. The term shown in various locations in the specification may not necessarily refer to a same embodiment, and is not an independent or alternative embodiment exclusive from another embodiment. It may be understood explicitly and implicitly by a person skilled in the art that in embodiments of this application, if there is no specific description and no logical conflict, terms and/or descriptions are consistent and may be mutually referenced between embodiments, and technical features in different embodiments may be combined based on an internal logical relationship thereof to form a new embodiment.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate three cases: only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent: a, b, or c, "a and b", "a and c", "b and c", or "a and b and c", where a, b, and c may be a single or plural.

It should be noted that, in this application, "indication" may include a direct indication, an indirect indication, an explicit indication, and an implicit indication. When it is described that a piece of indication information indicates A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, but not limited to, the to-be-indicated information such as the to-be-indicated information itself or an index of the to-be-indicated information, may be directly indicated. Alternatively, the to-be-indicated information may be indirectly indicated by indicating other information. An association relationship exists between the other information and the to-be-indicated information. Alternatively, only a part of the to-be-indicated information may be indicated, and another part of the to-be-indicated information is known or agreed in advance. For example, specific information may further be indicated by using an arrangement sequence of each piece of information that is pre-agreed (for example, that is stipulated in a protocol), so that indication overheads can be reduced to some extent. The to-be-indicated information may be sent together as a whole, or may be divided into a plurality of pieces of sub-information to be separately sent, and sending periodicities and/or sending opportunities of the sub-information may be the same, or may be different. A specific sending method is not limited in this application. The sending periodicities and/or the sending opportunities of the sub-information may be predefined, for example, predefined according to a protocol, or may be configured by a transmit end device by sending configuration information to a receive end device.

It should be noted that, in this application, "sending" may be understood as "outputting", and "receiving" may be understood as "inputting". For "send information to A", "to A" only indicates a direction of information transmission, and A is a destination, and "send information to A" is not necessarily limited to direct sending over an air interface. "Send information to A" includes directly sending information to A, and also includes indirectly sending information to A through a transmitter. Therefore, "send information to A" may also be understood as "output information destined for A". Similarly, "receive information from A" indicates that a source of information is A, includes directly receiving information from A, and also includes indirectly receiving information from A through a receiver. Therefore, "receive information from A" may also be understood as "input information from A".

The method provided in this application may be applied to various communication systems, for example, an internet of things (internet of things, IoT) system, a narrow band internet of things (narrow band internet of things, NB-IoT) system, a long term evolution (long term evolution, LTE) system, or a 5th generation (5th-generation, 5G) communication system, and a new communication system (for example, 6G) that appears in future communication development.

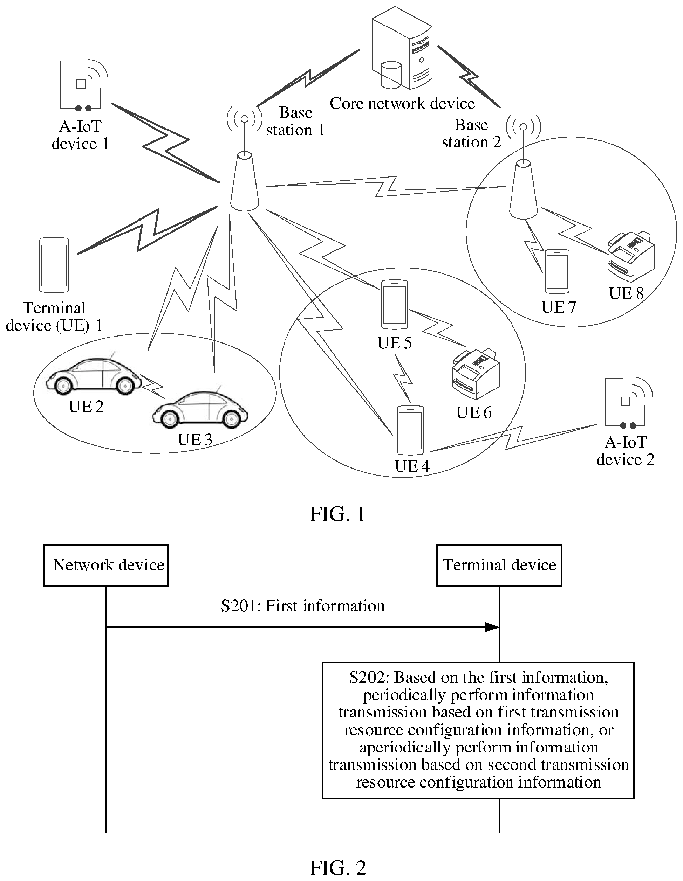

The technical solutions provided in this application may be further applied to machine type communication (machine type communication, MTC), a long term evolution for machines (long term evolution-machine, LTE-M) technology, a device-to-device (device-to-device, D2D) network, a machine to machine (machine to machine, M2M) network, an internet of things (internet of things, IoT) network, or another network. The IoT network may include, for example, internet of vehicles. Communication modes in an internet of vehicles system are collectively referred to as vehicle-to-everything (vehicle-to-everything, V2X, where X may represent everything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. For example, in FIG. 1 shown below, terminal devices may communicate with each other by using a D2D technology, an M2M technology, a V2X technology, or the like.

FIG. 1 is a diagram of a communication system according to an embodiment of this application.

As shown in FIG. 1, the communication system may include at least one access network device and at least one terminal device.

The access network device and the terminal device are separately described as follows.

For example, the access network device may be a next generation NodeB (next generation node B, gNB), a next generation evolved NodeB (next generation evolved nodeB, ng-eNB), an access network device in future 6G communication, or the like. The access network device may be any device having a wireless transceiver function, including but not limited to the base station (base station, BS) shown above. The base station may alternatively be a base station in a future communication system like a sixth generation communication system. Optionally, the access network device may be an access node, a wireless relay node, a wireless backhaul node, or the like in a wireless local area network (wireless fidelity, WiFi) system. Optionally, the access network device may be a radio controller in a cloud radio access network (cloud radio access network, CRAN) scenario. Optionally, the access network device may be a wearable device, a vehicle-mounted device, or the like. Optionally, the access network device may alternatively be a small cell, a transmission reception point (transmission reception point, TRP) (or may also be referred to as a transmission point), or the like. It may be understood that the access network device may alternatively be a base station in a future evolved public land mobile network (public land mobile network, PLMN), and the like.

In some deployments, the base station (like the gNB) may include a central unit (centralized unit, CU) and a distributed unit (distributed unit, DU). That is, functions of the base station in the access network are split, a part of the functions of the base station are deployed in the CU, and the remaining functions are deployed in the DU. In addition, a plurality of DUs sharing one single CU can reduce costs and facilitate network expansion. In some other deployments of the base station, the CU may be further divided into a CU-control plane (control plane, CP), a CU-user plane (user plane, UP), and the like. In still some other deployments of the base station, the base station may alternatively be an antenna element (radio unit, RU), or the like. In still some other deployments of the base station, the base station may alternatively be of an open radio access network (open radio access network, ORAN) architecture, or the like. A specific type of the base station is not limited in this application. For example, when the base station is of the ORAN architecture, the base station shown in embodiments of this application may be an access network device in the ORAN, a module in the access network device, or the like. In the ORAN system, the CU may also be referred to as an open (open, O)-CU, the DU may also be referred to as an O-DU, the CU-DU may also be referred to as an O-CU-DU, the CU-UP may also be referred to as an O-CU-UP, and the RU may also be referred to as an O-RU.

For ease of description, the following describes the method in this application by using an example in which the access network device is the base station.

For example, the terminal device may also be referred to as a user equipment (user equipment, UE), a terminal, or the like. The terminal device is a device with a wireless transceiver function, and may be deployed on land, including an indoor device or an outdoor device, a handheld device, a wearable device or a vehicle-mounted device, or a device deployed on a water surface, for example, a ship; or may alternatively be deployed in the air, for example, an airplane, a balloon, or a satellite. The terminal device may be a mobile phone (mobile phone), a pad (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. It may be understood that the terminal device may also be a terminal device in a future 6G network, a terminal device in a future evolved PLMN, or the like.

It may be understood that the terminal device shown in this application not only may include a vehicle (for example, an entire vehicle) in internet of vehicles, but also may include a vehicle-mounted device, a vehicle-mounted terminal, or the like in internet of vehicles. A specific form of the terminal device used in internet of vehicles is not limited in this application.

For ease of description, the following describes the method in this application by using by using an example in which the terminal device is a UE.

As shown in FIG. 1, the communication system may further include at least one core network device. The core network device is described as follows.

For example, the core network device includes services such as user access control, mobility management, session management, user security authentication, and accounting. The core network device includes a plurality of functional units, which may be classified into control-plane functional entities and data-plane functional entities. An access and mobility management function (access and mobility management function, AMF) is responsible for user access management, security authentication, and mobility management. A location management function (location management function, LMF) is responsible for managing and controlling a positioning service request of a target terminal, and processing positioning-related information. A user plane function (user plane function, UPF) is responsible for managing functions such as user plane data transmission and traffic statistics.

The communication system shown in FIG. 1 includes one core network device, two base stations, and eight UEs, for example, the core network device, a base station 1, a base station 2, and a UE 1 to a UE 8 shown in FIG. 1. In the communication system, the base station 1 may send downlink signals such as configuration information or downlink control information (downlink control information, DCI) to the UE 1 to the UE 6, and the UE 1 to the UE 6 may send uplink signals such as SRSs or physical uplink shared channels (physical uplink shared channel, PUSCH) to the base station 1. The base station 1 may further send downlink signals to the UE 7 and the UE 8 through the base station 2, and the UE 7 and the UE 8 may send uplink signals to the base station 1 through the base station 2. The base station 2 may send downlink signals such as configuration information or DCI to the UE 7 and the UE 8, and the UE 7 and the UE 8 may send uplink signals such as SRSs or PUSCHs to the base station 2. It may be understood that, for a communication manner between the UEs, refer to the foregoing descriptions. Details are not described herein again.

It should be understood that FIG. 1 shows an example of one core network device, two base stations, eight UEs, and communication links between the communication devices. Optionally, the communication system may include a plurality of base stations, and a coverage area of each base station may include another quantity of UEs, for example, more or fewer UEs. This is not limited in this application.

A plurality of antennas may be configured for the foregoing communication devices, for example, the core network device, the base station 1, the base station 2, and the UE 1 to the UE 8 in FIG. 1. The plurality of antennas may include at least one transmit antenna configured to send a signal, at least one receive antenna configured to receive a signal, and the like. A specific structure of each communication device is not limited in embodiments of this application. Optionally, the communication system may further include other network entities such as a network controller and a mobility management entity. This is not limited in embodiments of this application.

It may be understood that the diagram of the communication system shown in FIG. 1 is merely an example. For a diagram of a communication system in another form, refer to a relevant standard, protocol, or the like. Details are not described herein one by one.

Embodiments shown below are applicable to the communication system shown in FIG. 1, or are applicable to a communication system in another form. Details are not described below again.

This application provides a communication method, applied to the field of communication technologies, for example, communication in a scenario in which a plurality of A-IoT devices are densely deployed. To describe the solutions of this application more clearly, the following first describes some knowledge related to A-IoT device communication.

Internet of things(internet of things, IoT) refers Sensing device to connecting any object to a network through information according to an agreed protocol, where the object performs information exchange and communication via an information propagation media, to achieve functions such as intelligent identification, positioning, tracking, and monitoring. In recent years, internet of things has attracted wide attention in the field of wireless communication technologies. More "things" are connected to each other through internet of things, to improve production efficiency and living comfort.

However, with wide application of ambient internet of things (ambient internet of things, A-IoT) devices, when the A-IoT devices are densely deployed, severe communication interference exists between the A-IoT devices, resulting in low communication efficiency.

Therefore, how to avoid the communication interference between the A-IoT devices becomes an important topic researched by a person skilled in the art.

In view of this, in embodiments of this application, a new communication method is provided, to implement effective transmission resource allocation, avoid communication interference between A-IoT devices, and improve communication efficiency.

FIG. 2 is a schematic flowchart of a communication method according to an embodiment of this application. The communication method is applied to the field of communication technologies, for example, communication in a scenario in which a plurality of A-IoT devices are densely deployed. It may be understood that the communication method may be performed by a communication apparatus. The communication apparatus may be a network device, or may be a chip (system) or a circuit used in the network device. This is not limited in this application. The communication method includes, but is not limited to, the following steps.

**S201: The network device sends first information to a terminal device. Correspondingly, the terminal device receives the first information.**

**S202: Based on the first information, the terminal device periodically performs information transmission based on first transmission resource configuration information, or aperiodically performs information transmission based on second transmission resource configuration information.**

It may be understood that the network device in embodiments of this application is a device on which a processor that may be configured to execute computer-executable instructions is mounted, and may be an access network device like a base station or a transmission point TRP. Specifically, the network device may be the access network device (including but not limited to any one of the base station 1 and the base station 2) in FIG. 1, configured to perform the communication method in embodiments of this application, to implement effective transmission resource allocation, avoid communication interference between the A-IoT devices, and improve communication efficiency.

It may be understood that the terminal device in embodiments of this application is a device on which a processor that may be configured to execute computer-executable instructions is mounted, and may be a handheld terminal (like a mobile phone or a pad), a vehicle-mounted terminal (like a wireless terminal in self-driving), or the like. Specifically, the terminal device may alternatively be the terminal device (including but not limited to any one of the UE 1 to the UE 8 and an A-IoT device 1 and an A-IoT device 2) in FIG. 1, configured to participate in performing the communication method in embodiments of this application, to implement effective transmission resource allocation, avoid communication interference between the A-IoT devices, and improve communication efficiency.

The first information in this embodiment of this application indicates the terminal device to periodically perform information transmission based on the first transmission resource configuration information, or aperiodically perform information transmission based on the second transmission resource configuration information. Correspondingly, after receiving the first information, based on an indication of the first information, the terminal device periodically performs information transmission based on the first transmission resource configuration information, or aperiodically performs information transmission based on the second transmission resource configuration information.

Optionally, that the terminal device performs information transmission based on the indication of the first information may be that the terminal device sends information, or receives information. This is not limited in embodiments of this application.

Currently, when A-IoT devices are densely deployed, severe communication interference exists between the A-IoT devices, resulting in low communication efficiency.

However, in this embodiment of this application, the first information indicates the terminal device to periodically perform information transmission based on the first transmission resource configuration information, or aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, the first information may be carried in any one of the following messages:
a system information block (system information block, SIB), radio resource control (radio resource control, RRC) signaling, and a media access control control element (media access control control element, MAC-CE).

Descriptions are provided below in different cases based on different indicated content of the first information.

### Case 1:

**The first information indicates the terminal device to periodically perform information transmission based on the first transmission resource configuration information.**

In a possible embodiment, the first transmission resource configuration information includes at least two of the following:
identification information corresponding to a transmission mode, time domain information corresponding to the transmission mode, and frequency domain information corresponding to the transmission mode.

It may be understood that, the first transmission resource configuration information includes, but is not limited to, at least two of the identification information, the time domain information, and the frequency domain information that correspond to the transmission mode. The transmission mode and a corresponding transmission resource may be uniquely determined based on the foregoing at least two pieces of information, thereby implementing effective transmission resource allocation.

Optionally, the time domain information corresponding to the transmission mode includes at least one of the following:
a length of a transmission periodicity corresponding to one or more transmission modes, a start position offset of the transmission periodicity, and correspondences between one or more transmission time periods within the transmission periodicity and the transmission modes.

It may be understood that the time domain information corresponding to the transmission mode includes, but is not limited to, at least one of the length of the transmission periodicity corresponding to the one or more transmission modes, the start position offset of the transmission periodicity, and the correspondences between the one or more transmission time periods within the transmission periodicity and the transmission modes. The transmission mode and a corresponding time domain resource may be determined based on the foregoing at least one piece of information, thereby implementing effective transmission resource allocation.

Optionally, the correspondences between the one or more transmission time periods within the transmission periodicity and the transmission modes may be implemented in a manner of a bitmap (bitmap).

For example, assuming that five transmission modes, which are respectively a transmission mode 1, a transmission mode 2, a transmission mode 3, a transmission mode 4, and a transmission mode 5, are set in one transmission periodicity, and the transmission periodicity includes five time periods, which are respectively a time period 1, a time period 2, a time period 3, a time period 4, and a time period 5, correspondences between the transmission modes and the time periods are respectively: The transmission mode 1 corresponds to the time period 1, the transmission mode 2 corresponds to the time period 2, the transmission mode 3 corresponds to the time period 3, the transmission mode 4 corresponds to the time period 4, and the transmission mode 5 corresponds to the time period 5. Details are shown in the following Table 1.

**Table 1**

| Transmission mode | One transmission periodicity | | | | | | | | | |
|---|---|---|---|---|---|---|---|---|---|---|
| | Time period 1 | Time period 2 | Time period 3 | Time period 4 | Time period 5 | | | | | |
| Transmission mode 1 | √ | | | | | | | | | |
| Transmission mode 2 | | √ | | | | | | | | |
| Transmission mode 3 | | | √ | | | | | | | |
| Transmission mode 4 | | | | √ | | | | | | |
| Transmission mode 5 | | | | | √ | | | | | |

It can be learned from Table 1 that, when a transmission periodicity is a radio frame (10 ms), and each time period is a subframe (1 ms), one transmission mode corresponds to one time period, and different transmission modes respectively correspond to different time periods.

For example, assuming that five transmission modes, which are respectively a transmission mode 1, a transmission mode 2, a transmission mode 3, a transmission mode 4, and a transmission mode 5, are set in one transmission periodicity, and the transmission periodicity includes seven time periods, which are respectively a time period 1, a time period 2, a time period 3, a time period 4, a time period 5, a time period 6, and a time period 7, correspondences between the transmission modes and the time periods are respectively: The transmission mode 1 corresponds to the time period 1, the transmission mode 2 corresponds to the time period 2, the transmission mode 3 corresponds to the time period 3, the transmission mode 4 corresponds to the time period 4 and the time period 5, and the transmission mode 5 corresponds to the time period 6 and the time period 7. Details are shown in the following Table 2.

**Table 2**

| Transmission mode | One transmission periodicity | | | | | | | | | |
|---|---|---|---|---|---|---|---|---|---|---|
| | Time period 1 | Time period 2 | Time period 3 | Time period 4 | Time period 5 | Time period 6 | Time period 7 | | | |
| Transmission mode 1 | √ | | | | | | | | | |
| Transmission mode 2 | | √ | | | | | | | | |
| Transmission mode 3 | | | √ | | | | | | | |
| Transmission mode 4 | | | | √ | √ | | | | | |
| Transmission mode 5 | | | | | | √ | √ | | | |

It can be learned from Table 2 that, when a transmission periodicity is a radio frame (10 ms), and each time period is a subframe (1 ms), some transmission modes, for example, the transmission mode 1, the transmission mode 2, and the transmission mode 3, each correspond to one time period, while the remaining transmission modes, for example, the transmission mode 4 and the transmission mode 5, each correspond to a plurality of time periods, and different transmission modes respectively correspond to different time periods.

Based on the foregoing time domain information corresponding to the transmission mode, the time domain resource corresponding to the transmission mode may be uniquely determined based on the transmission mode, thereby implementing effective transmission resource allocation.

Optionally, the transmission periodicity includes a plurality of time units, and the start position offset of the transmission periodicity satisfies the following relationship: $Offset = \left({2}^{μ}*10{n}_{f}+{n}_{s}\right) mod T .$

Offset represents the start position offset of the transmission periodicity, µ represents a parameter of a subcarrier spacing inside a system frame, n_{f} represents a sequence number of the system frame, and nₛ represents a sequence number of a time unit inside the system frame.

It may be understood that the transmission periodicity includes the plurality of time units, and the start position offset of the transmission periodicity (that is, a start time unit of the transmission periodicity) satisfies the foregoing relationship, so that the correspondences between the one or more transmission time periods within the transmission periodicity and the transmission modes can be implemented, thereby implementing effective transmission resource allocation.

Optionally, the time unit may be a slot (slot), may be a radio frame, or may be an orthogonal frequency division multiplexing (orthogonal frequency division multiplexing, OFDM) symbol. This is not limited in embodiments of this application.

Optionally, the start position offset of the transmission periodicity may be configured by the network device, or may be preconfigured according to a protocol. This is not limited in embodiments of this application.

Optionally, for the parameter *µ* of the subcarrier spacing inside the system frame, refer to section 4.2 of the protocol, 3GPP TS 38.211, as shown in the following Table 3.

**Table 3**

| µ | Δf = 2^{µ}·15 [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |
| 6 | 960 | Normal |

It can be learned from Table 3 that, the parameter *µ* of the subcarrier spacing inside the system frame may be specifically a value in the foregoing Table 3.

Optionally, the frequency domain information corresponding to the transmission mode includes at least one of the following:
a start position in frequency domain corresponding to the transmission mode and a frequency domain bandwidth occupied by the transmission mode.

It may be understood that the frequency domain information corresponding to the transmission mode includes, but is not limited to, at least one of the start position in frequency domain corresponding to the transmission mode and the frequency domain bandwidth occupied by the transmission mode. The transmission mode and a corresponding frequency domain resource may be determined based on the foregoing at least one piece of information, thereby implementing effective transmission resource allocation.

Optionally, the start position in frequency domain corresponding to the transmission mode may be an index of a start resource block (resource block, RB), and the frequency domain bandwidth occupied by the transmission mode may be a quantity of consecutive RBs. The transmission mode and the corresponding frequency domain resource may be determined based on indexes and the quantity of the resource blocks, thereby implementing effective transmission resource allocation.

In a possible embodiment, in the communication method in embodiments of this application, the following step S203 may be further performed.

The network device sends second information to the terminal device. Correspondingly, the terminal device receives the second information from the network device.

The second information indicates to activate or deactivate the one or more transmission modes in the first transmission resource configuration information.

Optionally, the second information includes identification information corresponding to one or more transmission modes, for indicating to activate or deactivate the one or more transmission modes.

Optionally, the second information may be carried in a media access control control element (media access control control element, MAC-CE), and indicates to activate or deactivate the one or more transmission modes in the first transmission resource configuration information carried in a system information block (system information block, SIB) or radio resource control (radio resource control, RRC) signaling.

Optionally, the second information and the first information may be carried in different messages, or the second information and the first information may be carried in different fields of a same message. This is not limited in embodiments of this application.

According to this embodiment of this application, the transmission mode in the first transmission resource configuration information may be activated, thereby implementing effective transmission resource allocation. In a case in which a plurality of A-IoT devices are densely deployed, a transmission resource is effectively allocated to the plurality of A-IoT devices, so that communication interference between the A-IoT devices can be avoided, and communication efficiency can be improved.

In a possible embodiment, in the communication method in embodiments of this application, the following step S204 may be further performed.

The network device sends third information to the terminal device. Correspondingly, the terminal device receives the third information from the network device.

The third information indicates the terminal device to periodically perform information transmission based on the one or more transmission modes in the first transmission resource configuration information, or indicates the terminal device to periodically perform information transmission based on the one or more transmission modes indicated by the second information.

It may be understood that corresponding transmission modes in which the terminal device is indicated by the third information to perform information transmission may be one or more of transmission modes configured by using SIB/RR signaling, or may be one or more of transmission modes activated by using MAC-CE signaling.

Optionally, the third information may be carried in downlink control information (down control information, DCI).

Optionally, the third information, the second information, and the first information may be carried in different messages, or may be respectively carried in different fields of a same message. This is not limited in embodiments of this application.

According to embodiments of this application, effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

### Case 2:

**The first information indicates the terminal device to aperiodically perform information transmission based on the second transmission resource configuration information.**

In a possible embodiment, the second transmission resource configuration information includes at least one of the following:
length information of a time window and frequency-domain position information.

It may be understood that the second transmission resource configuration information includes, but is not limited to, at least one of the length information of the time window and the frequency-domain position information. A transmission resource may be uniquely determined based on the foregoing at least one piece of information, thereby implementing effective transmission resource allocation.

Optionally, the second transmission resource configuration information may be carried in signaling such as a SIB, RRC, a MAC-CE, to be sent to the terminal device, or may be preconfigured according to a protocol. This is not limited in embodiments of this application.

Optionally, the length information of the time window and/or the frequency-domain position information are/is carried in the first information; or the length information of the time window and/or the frequency-domain position information are/is preconfigured according to a protocol.

It may be understood that the length information of the time window and/or the frequency-domain position information may be carried in the first information to be sent to the terminal device, or may be understood as being carried in the signaling such as the SIB, the RRC, and the MAC-CE to be sent to the terminal device, or may be preconfigured according to a protocol. This is not limited in embodiments of this application.

In a possible embodiment, in the communication method in embodiments of this application, the following step S205 may be further performed.

The network device sends fourth information to the terminal device. Correspondingly, the terminal device receives the fourth information from the network device.

The fourth information indicates to start one or more time windows in the second transmission resource configuration information, thereby implementing effective transmission resource allocation. In a case in which a plurality of A-IoT devices are densely deployed, a transmission resource is effectively allocated to the plurality of A-IoT devices, so that communication interference between the A-IoT devices can be avoided, and communication efficiency can be improved.

Optionally, when the second transmission resource configuration information includes a plurality of time windows, the fourth information indicates to start the one or more time windows. When the second transmission resource configuration information includes one time window, the fourth information indicates to start the time window.

Optionally, a started time window is automatically closed after a length of the time window elapses.

Optionally, the fourth information may be carried in any one of the following messages:
a media access control control element (media access control control element, MAC-CE) and downlink control information (down control information, DCI).

Optionally, the fourth information and the first information may be carried in different messages, or may be respectively carried in different fields of a same message. This is not limited in embodiments of this application.

In a possible embodiment, in the communication method in embodiments of this application, the following step S206 may be further performed.

The network device sends fifth information to the terminal device. Correspondingly, the terminal device receives the fifth information from the network device.

The fifth information indicates a relative position between a time window other than a 1^{st} time window in the second transmission resource configuration information and the 1^{st} time window, or a relative position between a time window other than a 1^{st} time window in the second transmission resource configuration information and the 1^{st} time window is preconfigured according to a protocol, to determine positions of the one or more time windows, thereby implementing effective transmission resource allocation.

Optionally, when the fourth information is sent by using the MAC-CE, if a hybrid automatic repeat request-acknowledgement (Hybrid Automatic Repeat request-ACKnowledgement, HARQ-ACK) corresponding to the MAC-CE is fed back in an n^{th} slot, an allocated transmission resource starts to be valid at an (n + K1)^{th} slot, where K1 may be determined based on the foregoing fifth information or preconfigured according to a protocol.

Optionally, when the fourth information is sent by using the DCI, if the DCI signaling is received at an n^{th} slot, an allocated transmission resource starts to be valid at an (n+K2)^{th} slot, where K2 may be determined based on the foregoing fifth information or preconfigured according to protocol.

Optionally, the fifth information, the fourth information, and the first information may be carried in different messages, or may be respectively carried in different fields of a same message. This is not limited in embodiments of this application.

It should be understood that, in the foregoing Case 1 and/or Case 2, the terminal device includes, but is not limited to, an internet of things IoT terminal. When the communication method in this embodiment of this application is applied to a case in which a plurality of A-IoT devices are densely deployed, a transmission resource is effectively allocated to the plurality of A-IoT devices, so that communication interference between the A-IoT devices can be avoided, and communication efficiency can be improved.

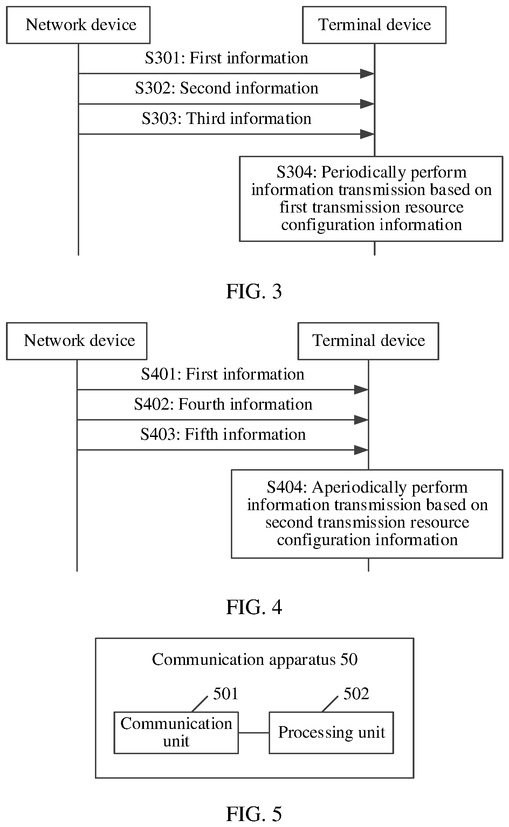

FIG. 3 is a schematic flowchart of another communication method according to an embodiment of this application. It may be understood that steps in this embodiment of this application may be considered as a proper variation or addition to the foregoing embodiment in FIG. 2. Alternatively, it may be understood that the communication method in this embodiment of this application may also be considered as an embodiment that can be independently executed. This is not limited in this application. The communication method provided in this embodiment of this application is applied to the field of communication technologies, for example, communication in a scenario in which a plurality of A-IoT devices are densely deployed.

It may be understood that, for a network device involved in the communication method provided in this embodiment of this application, refer to the network device in the communication method shown in FIG. 2. For a terminal device involved in the communication method provided in this embodiment of this application, refer to the terminal device in the communication method shown in FIG. 2. Details are not described herein again.

The communication method includes, but is not limited to, the following steps.

S301: The network device sends first information to the terminal device. Correspondingly, the terminal device receives the first information.

This is consistent with step S201 in the embodiment shown in FIG. 2, and details are not described herein again.

S302: The network device sends second information to the terminal device. Correspondingly, the terminal device receives the second information.

This is consistent with step S203 in the embodiment shown in FIG. 2, and details are not described herein again.

S303: The network device sends third information to the terminal device. Correspondingly, the terminal device receives the third information.

This is consistent with step S204 in the embodiment shown in FIG. 2, and details are not described herein again.

S304: The terminal device periodically performs information transmission based on first transmission resource configuration information.

Specifically, the terminal device periodically performs information transmission based on one or more transmission modes in the first transmission resource configuration information, or periodically performs information transmission based on one or more transmission modes indicated by the second information.

It may be understood that in this embodiment of this application, the first information indicates the terminal device to periodically perform information transmission based on the first transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

FIG. 4 is a schematic flowchart of still another communication method according to an embodiment of this application. It may be understood that steps in this embodiment of this application may be considered as a proper variation or addition to the foregoing embodiment in FIG. 2. Alternatively, it may be understood that the communication method in this embodiment of this application may also be considered as an embodiment that can be independently executed. This is not limited in this application. The communication method provided in this embodiment of this application is applied to the field of communication technologies, for example, communication in a scenario in which a plurality of A-IoT devices are densely deployed.

It may be understood that, for a network device involved in the communication method provided in this embodiment of this application, refer to the network device in the communication method shown in FIG. 2. For a terminal device involved in the communication method provided in this embodiment of this application, refer to the terminal device in the communication method shown in FIG. 2. Details are not described herein again.

The communication method includes, but is not limited to, the following steps.

S401: The network device sends first information to the terminal device. Correspondingly, the terminal device receives the first information.

This is consistent with step S201 in the embodiment shown in FIG. 2, and details are not described herein again.

S402: The network device sends fourth information to the terminal device. Correspondingly, the terminal device receives the second information.

This is consistent with step S205 in the embodiment shown in FIG. 2, and details are not described herein again.

S403: The network device sends fifth information to the terminal device. Correspondingly, the terminal device receives the third information.

This is consistent with step S206 in the embodiment shown in FIG. 2, and details are not described herein again.

S404: The terminal device aperiodically performs information transmission based on second transmission resource configuration information.

Specifically, the terminal device determines positions of one or more time windows based on the second transmission resource configuration information, and aperiodically performs information transmission on frequency domain resources corresponding to the positions of the one or more time windows.

It may be understood that in this embodiment of this application, the first information indicates the terminal device to aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

The foregoing describes the methods in embodiments of this application in detail. The following provides an apparatus configured to implement any one of the methods in embodiments of this application, for example, provides an apparatus including units (or means) configured to implement the steps performed by the device in any one of the foregoing methods.

FIG. 5 is a diagram of a structure of a communication apparatus according to an embodiment of this application.

As shown in FIG. 5, the communication apparatus 50 may include a communication unit 501 and a processing unit 502. The communication unit 501 and the processing unit 502 may be software, hardware, or a combination of software and hardware.

The communication unit 501 may implement a sending function and/or a receiving function, and the communication unit 501 may also be referred to as a transceiver unit. The communication unit 501 may alternatively be a unit that integrates an obtaining unit and a sending unit. The obtaining unit is configured to implement a receiving function, and the sending unit is configured to implement a sending function. Optionally, the communication unit 501 may be configured to receive information sent by another apparatus, or may be configured to send information to another apparatus.

In a possible design, the communication apparatus 50 may correspond to the network device in the method embodiments shown in FIG. 2, FIG. 3, and FIG. 4. For example, the communication apparatus 50 may be a network device, or may be a chip in the network device. The communication apparatus 50 may include a unit configured to perform the operations performed by the network device in the method embodiments shown in FIG. 2, FIG. 3, and FIG. 4. In addition, the units in the communication apparatus 50 are respectively configured to implement the operations performed by the network device in the method embodiments shown in FIG. 2, FIG. 3, and FIG. 4. The units are described as follows.

The communication unit 501 is configured to send first information to a terminal device, where the first information indicates the terminal device to periodically perform information transmission based on first transmission resource configuration information, or aperiodically perform information transmission based on second transmission resource configuration information.

In a possible implementation, the apparatus further includes:
the processing unit 502, configured to generate the first information.

For steps performed by the communication unit 501 and the processing unit 502 described in this design, refer to implementations corresponding to the network device corresponding to the method embodiments shown in FIG. 2, FIG. 3, and FIG. 4.

For technical effects of the implementations performed by the communication unit 501 and the processing unit 502 described in this design, refer to descriptions of the technical effects corresponding to the method embodiments shown in FIG. 2, FIG. 3, and FIG. 4.

In another possible design, the communication apparatus 50 may correspond to the terminal device in the method embodiments shown in FIG. 2, FIG. 3, and FIG. 4. For example, the communication apparatus 50 may be a terminal device, or may be a chip in the terminal device. The communication apparatus 50 may include a unit configured to perform the operations performed by the terminal device in the method embodiments shown in FIG. 2, FIG. 3, and FIG. 4. In addition, the units in the communication apparatus 50 are respectively configured to implement the operations performed by the terminal device in the method embodiments shown in FIG. 2, FIG. 3, and FIG. 4. The units are described as follows.

The communication unit 501 is configured to receive first information from a network device, where the first information indicates the terminal device to periodically perform information transmission based on first transmission resource configuration information, or aperiodically perform information transmission based on second transmission resource configuration information.

The processing unit 502 is configured to, based on the first information, periodically perform information transmission based on the first transmission resource configuration information, or aperiodically perform information transmission based on the second transmission resource configuration information.

For steps performed by the communication unit 501 and the processing unit 502 described in this design, refer to implementations corresponding to the terminal device corresponding to the method embodiments shown in FIG. 2, FIG. 3, and FIG. 4.

For technical effects of the implementations performed by the communication unit 501 and the processing unit 502 described in this design, refer to descriptions of the technical effects corresponding to the method embodiments shown in FIG. 2, FIG. 3, and FIG. 4.

According to embodiments of this application, units of the apparatus shown in FIG. 5 may be separately or wholly combined into one or a plurality of other units, or one (or more) of the units herein may further be divided into the plurality of units of smaller functions. In this way, same operations can be implemented, and implementation of the technical effects of embodiments of this application is not affected. The foregoing units are divided based on logical functions. In actual application, a function of one unit may be implemented by a plurality of units, or functions of a plurality of units are implemented by one unit. In another embodiment of this application, the electronic device may also include another unit. In actual application, these functions may alternatively be cooperatively implemented by another unit and may be cooperatively implemented by a plurality of units.

It should be noted that for implementation of each unit, refer to corresponding descriptions of the method embodiments shown in FIG. 2, FIG. 3, and FIG. 4.

In the communication apparatus 50 described in FIG. 5, the first information indicates the terminal device to aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

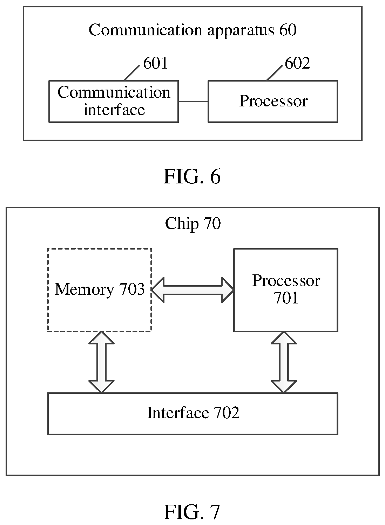

FIG. 6 is a diagram of a structure of a communication apparatus according to an embodiment of this application.

It should be understood that the communication apparatus 60 shown in FIG. 6 is merely an example. The communication apparatus in this embodiment of this application may further include other components, or include components having functions similar to those of the components in FIG. 6, or may not include all the components in FIG. 6.

The communication apparatus 60 includes a communication interface 601 and at least one processor 602.

The communication apparatus 60 may correspond to any network element or device in a network device or a terminal device. The communication interface 601 is configured to send and receive signals, and the at least one processor 602 executes program instructions, so that the communication apparatus 60 implements a corresponding process of a method performed by a corresponding device in the foregoing method embodiments.

In a possible design, the communication apparatus 60 may correspond to the network device in the method embodiments shown in FIG. 2, FIG. 3, and FIG. 4. For example, the communication apparatus 60 may be a network device, or may be a chip in the network device. The communication apparatus 60 may include a component configured to perform the operations performed by the network device in the method embodiments. In addition, the components in the communication apparatus 60 are respectively configured to implement the operations performed by the network device in the method embodiments. Details may be as follows:
sending first information to the terminal device, where the first information indicates the terminal device to periodically perform information transmission based on first transmission resource configuration information, or aperiodically perform information transmission based on second transmission resource configuration information.

In another possible design, the communication apparatus 60 may correspond to the terminal device in the method embodiments shown in FIG. 2, FIG. 3, and FIG. 4. For example, the communication apparatus 60 may be a terminal device, or may be a chip in the terminal device. The communication apparatus 60 may include a component configured to perform the operations performed by the terminal device in the method embodiments. In addition, the components in the communication apparatus 60 are respectively configured to implement the operations performed by the terminal device in the method embodiments. Details may be as follows:
receiving first information from the network device, where the first information indicates the terminal device to periodically perform information transmission based on first transmission resource configuration information, or aperiodically perform information transmission based on second transmission resource configuration information; and
based on the first information, periodically performing information transmission based on the first transmission resource configuration information, or aperiodically performing information transmission based on the second transmission resource configuration information.

In the communication apparatus 60 described in FIG. 6, the first information indicates the terminal device to aperiodically perform information transmission based on the second transmission resource configuration information, so that effective transmission resource allocation can be implemented. In a case in which a plurality of A-IoT devices are densely deployed, a transmission resource is effectively allocated to the plurality of A-IoT devices, so that communication interference between the A-IoT devices can be avoided, and communication efficiency can be improved.

For a case in which the communication apparatus may be a chip or a chip system, refer to a diagram of a structure of a chip shown in FIG. 7.

As shown in FIG. 7, the chip 70 includes a processor 701 and an interface 702. There may be one or more processors 701, and there may be a plurality of interfaces 702. It should be noted that functions corresponding to the processor 701 and the interface 702 may be implemented by a hardware design, or may be implemented by a software design, or may be implemented by a combination of software and hardware. This is not limited herein.

Optionally, the chip 70 may further include a memory 703, and the memory 703 is configured to store necessary program instructions and data.

In this application, the processor 701 may be configured to: invoke, from the memory 703, an implementation program of the communication methods that are provided in one or more embodiments of this application and that are in one or more devices or network elements in a network device or a terminal device, and execute instructions included in the program. The interface 702 may be configured to output an execution result of the processor 701. In this application, the interface 702 may be specifically configured to output messages or information of the processor 701.

For the communication methods provided by one or more embodiments of this application, refer to the embodiments shown in FIG. 2, FIG. 3, and FIG. 4, and details are not described herein again.

The processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the methods shown in FIG. 2, FIG. 3, and FIG. 4 may be implemented.

According to the method provided in embodiments of this application, an embodiment of this application further provides a computer program product. The computer program product includes a computer program. When the computer program is run on a processor, the methods shown in FIG. 2, FIG. 3, and FIG. 4 may be implemented.

An embodiment of this application further provides a system. The system includes at least one of the communication apparatus 50, the communication apparatus 60, or the chip 70, configured to perform steps performed by corresponding devices in any one of the foregoing embodiments in FIG. 2, FIG. 3, and FIG. 4.

An embodiment of this application further provides a system. The system includes a network device and a terminal device. The network device is configured to perform the steps performed by the network device in any one of the foregoing embodiments in FIG. 2, FIG. 3, and FIG. 4, and the terminal device is configured to perform the steps performed by the terminal device in any one of the foregoing embodiments in FIG. 2, FIG. 3, and FIG. 4.

An embodiment of this application further provides a processing apparatus, including a processor and an interface. The processor is configured to perform the method in any one of the foregoing method embodiments.

It should be understood that the foregoing processing apparatus may be a chip. For example, the processing apparatus may be a field programmable gate array (field programmable gate array, FPGA), may be a general-purpose processor, a digital signal processor (digital signal processing, DSP), an application-specific integrated circuit (application specific-integrated circuit, ASIC), a field programmable gate array (field programmable gate array, FPGA) or another programmable logic device, a discrete gate or a transistor logic device, or a discrete hardware component, or may be a system on chip (system on chip, SoC), a central processing unit (central processing unit, CPU), a network processor (network processor, NP), a digital signal processor circuit (digital signal processor, DSP), a micro controller unit (micro controller unit, MCU), a programmable logic device (programmable logic device, PLD), or another integrated chip. The processing apparatus may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the system and the method described herein are intended to include, but are not limited to, these and any other suitable types of memories.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

The unit in the foregoing apparatus embodiments completely corresponds to the electronic devices in the method embodiments, and corresponding modules or units perform corresponding steps. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

It may be understood that in embodiments of this application, the electronic device may perform some or all of the steps in embodiments of this application. These steps or operations are merely examples. In embodiments of this application, other operations or variations of various operations may be performed. In addition, the steps may be performed in a sequence different from that presented in embodiments of this application, and not all the operations in embodiments of this application may be necessarily performed.

A person of ordinary skill in the art may be aware that, units and algorithm steps with reference to examples described in embodiments disclosed in this specification can be implemented by electronic hardware or a combination of computer software and electronic hardware. Whether the functions are executed by hardware or software depends on particular applications and design constraint conditions of the technical solutions. A person skilled in the art may use different methods to implement the described functions of each particular application, but it does not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of solutions of embodiments.

In addition, functional units in embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or a part making contributions, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
sending first information to a terminal device, wherein the first information indicates the terminal device to periodically perform information transmission based on first transmission resource configuration information, or aperiodically perform information transmission based on second transmission resource configuration information.

2. The method according to claim 1, wherein the first transmission resource configuration information comprises at least two of the following:
identification information corresponding to a transmission mode, time domain information corresponding to the transmission mode, and frequency domain information corresponding to the transmission mode.

3. The method according to claim 2, wherein the time domain information corresponding to the transmission mode comprises at least one of the following:
a length of a transmission periodicity corresponding to one or more transmission modes, a start position offset of the transmission periodicity, and correspondences between one or more transmission time periods within the transmission periodicity and the transmission modes.

4. The method according to claim 3, wherein the transmission periodicity comprises a plurality of time units, and the start position offset of the transmission periodicity satisfies the following relationship:$Offset = \left({2}^{μ}*10{n}_{f}+{n}_{s}\right) mod T ,$ wherein
Offset represents the start position offset of the transmission periodicity, µ represents a parameter of a subcarrier spacing inside a system frame, n_{f} represents a sequence number of the system frame, and nₛ represents a sequence number of a time unit inside the system frame.

5. The method according to any one of claims 2 to 4, wherein the frequency domain information corresponding to the transmission mode comprises at least one of the following:
a start position in frequency domain corresponding to the transmission mode and a frequency domain bandwidth occupied by the transmission mode.

6. The method according to any one of claims 1 to 5, wherein the method further comprises:
sending second information to the terminal device, wherein the second information indicates to activate or deactivate the one or more transmission modes in the first transmission resource configuration information.

7. The method according to any one of claims 1 to 6, wherein the method further comprises:
sending third information to the terminal device, wherein the third information indicates the terminal device to periodically perform information transmission based on the one or more transmission modes in the first transmission resource configuration information, or indicates the terminal device to periodically perform information transmission based on the one or more transmission modes indicated by the second information.

8. The method according to claim 1, wherein the second transmission resource configuration information comprises at least one of the following:
length information of a time window and frequency-domain position information.

9. The method according to claim 8, wherein the length information of the time window and/or the frequency-domain position information are/is carried in the first information; or the length information of the time window and/or the frequency-domain position information are/is preconfigured according to a protocol.

10. The method according to claim 8 or 9, wherein the method further comprises:
sending fourth information to the terminal device, wherein the fourth information indicates to start one or more time windows in the second transmission resource configuration information.

11. The method according to any one of claims 8 to 10, wherein the method further comprises:
sending fifth information to the terminal device, wherein the fifth information indicates a relative position between a time window other than a 1^{st} time window in the second transmission resource configuration information and the 1^{st} time window, or
a relative position between a time window other than a 1^{st} time window in the second transmission resource configuration information and the 1^{st} time window is pre-agreed on according to a protocol.

12. The method according to any one of claims 1 to 11, wherein the terminal device comprises an internet of things IoT terminal.

13. A communication method, comprising:
receiving first information from a network device, wherein the first information indicates a terminal device to periodically perform information transmission based on first transmission resource configuration information, or aperiodically perform information transmission based on second transmission resource configuration information; and
based on the first information, periodically performing information transmission based on the first transmission resource configuration information, or aperiodically performing information transmission based on the second transmission resource configuration information.

14. The method according to claim 13, wherein the first transmission resource configuration information comprises at least two of the following:
identification information corresponding to a transmission mode, time domain information corresponding to the transmission mode, and frequency domain information corresponding to the transmission mode.

15. The method according to claim 14, wherein the time domain information corresponding to the transmission mode comprises at least one of the following:
a length of a transmission periodicity corresponding to one or more transmission modes, a start position offset of the transmission periodicity, and correspondences between one or more transmission time periods within the transmission periodicity and the transmission modes.

16. The method according to claim 15, wherein the transmission periodicity comprises a plurality of time units, and the start position offset of the transmission periodicity satisfies the following relationship: $Offset = \left({2}^{μ}*10{n}_{f}+{n}_{s}\right) mod T ,$ wherein
Offset represents the start position offset of the transmission periodicity, µ represents a parameter of a subcarrier spacing inside a system frame, n_{f} represents a sequence number of the system frame, and nₛ represents a sequence number of a time unit inside the system frame.

17. The method according to any one of claims 14 to 16, wherein the frequency domain information corresponding to the transmission mode comprises at least one of the following:
a start position in frequency domain corresponding to the transmission mode and a frequency domain bandwidth occupied by the transmission mode.

18. The method according to any one of claims 13 to 17, wherein the method further comprises:
receiving second information from the network device, wherein the second information indicates to activate or deactivate the one or more transmission modes in the first transmission resource configuration information.

19. The method according to any one of claims 13 to 18, wherein the method further comprises:
receiving third information from the network device, wherein the third information indicates the terminal device to periodically perform information transmission based on the one or more transmission modes in the first transmission resource configuration information, or indicates the terminal device to periodically perform information transmission based on the one or more transmission modes indicated by the second information; and
based on the third information, periodically performing information transmission based on the one or more transmission modes in the first transmission resource configuration information, or periodically performing information transmission based on the one or more transmission modes indicated by the second information.

20. The method according to claim 13, wherein the second transmission resource configuration information comprises at least one of the following:
length information of a time window and frequency-domain position information.

21. The method according to claim 20, wherein the length information of the time window and/or the frequency-domain position information are/is carried in the first information; or the length information of the time window and/or the frequency-domain position information are/is preconfigured according to a protocol.

22. The method according to claim 20 or 21, wherein the method further comprises:
receiving fourth information from the network device, wherein the fourth information indicates to start one or more time windows in the second transmission resource configuration information.

23. The method according to any one of claims 20 to 22, wherein the method further comprises:
receiving fifth information from the network device, wherein the fifth information indicates a relative position between a time window other than a 1^{st} time window in the second transmission resource configuration information and the 1^{st} time window, or
a relative position between a time window other than a 1^{st} time window in the second transmission resource configuration information and the 1^{st} time window is pre-agreed on according to a protocol.

24. The method according to any one of claims 13 to 23, wherein the terminal device comprises an internet of things IoT terminal.

25. A communication apparatus, comprising a unit configured to perform the method according to any one of claims 1 to 12 or claims 13 to 24.

26. A communication apparatus, comprising a processor, wherein the processor is configured to perform the method according to any one of claims 1 to 12 or claims 13 to 24.

27. A communication apparatus, comprising a logic circuit and an interface, wherein the logic circuit is coupled to the interface; and
the interface is configured to input and/or output information, and the logic circuit is configured to perform the method according to any one of claims 1 to 12 or claims 13 to 24.

28. A computer-readable storage medium, wherein the computer-readable storage medium is configured to store a computer program, and when the computer program is executed, the method according to any one of claims 1 to 12 or claims 13 to 24 is performed.

29. A communication system, comprising a network device and a terminal device, wherein
the network device is configured to perform the method according to any one of claims 1 to 12, and the terminal device is configured to perform the method according to any one of claims 13 to 24.
